# EUROPEAN PATENT APPLICATION

(11) **EP 3 783 514 A1**
(43) Date of publication of application: **24.02.2021**
(21) Application number: 19192967.8
(22) Date of filing: 21.08.2019
(51) Int. Cl.: G06F 21/55, G06F 21/57, H04L 29/06

(54) **A SYSTEM AND A METHOD FOR AUTOMATED CYBER-SECURITY RISK CONTROL**

(71) Applicant: Seculting SA, 1350 Orbe (CH)
(72) Inventor: Frey, Nicolas, 1350 Orbe (CH); Marclay, David, 1871 Choex (CH)
(74) Representative: Omnis-IP

(57) **Abstract**

The present invention relates to a system and a method for optimising security of an information system against cyber-attack. An automated processor-implemented method is disclosed for measuring and reporting on the exposure of information assets in the information system to cyber-attacks. The method may include steps to remedy or otherwise improve the exposure to cyber-attacks.

## Description

### TECHNICAL DOMAIN

The inventive concepts described herein relate generally to security issues in the domain of information technology. More particularly, these concepts find use in the analysis and improvement of cyber-risk vulnerabilities within an information system.

### BACKGROUND

Business and industry rely heavily on computer networks and systems. However, such networks and system are becoming more and more vulnerable to cyber-attacks. Different types of attacks have varying levels of impact on an organisation. Unauthorised copying of valuable information assets by malicious parties can result in revenue loss for the organisation or damage to the organisation's reputation. Unauthorised access by malicious parties, which result in the integrity of information assets being thrown into doubt, is also damaging for organisations. Other types of events can lead to an organisation's information assets no longer being accessible by the organisation, which also causes loss to the organisation in many ways. Such events may include phenomenon such as unauthorised access, or failures due to power outages or hardware failures such as a hard disk failure, for example.

The growth in the number of access points which are now generally provided in most complex information systems also increases the exposure of such systems to potential compromise and/or loss of valuable information assets through cyber-attacks.

Scoring systems are known for assessing the severity of computer system security vulnerabilities, allowing system administrators to prioritise their responses to the threats. Such scoring systems generally take into account the perceived value of the data and the ease with which the data can be maliciously exploited. However, these systems do not provide a sufficient level of detail, especially for complex information systems comprising many servers and workstations. Another problem is that these systems do not take account of the vulnerabilities posed by human actors in the system.

Other prior art tools exist for detecting security breaches in corporate systems, allowing attackers to have access to confidential information. These tools explore attack paths, building models of the attack paths starting from outside of the system, entering the system at one or more entry points and working their way in towards the confidential information. Such tools generally seek to provide a measure of the time it takes to detect a breach or the time it takes to repair or otherwise combat a breach or the time it takes for an attacker to breach the security of the system, thus exposing the confidential information. This type of tool is generally agnostic with regards to the level of risk of an attack occurring or to the perceived value of the confidential information. It is worth noting that tools which analyse a system starting from the outside and exploring paths which would lead to the confidential information, by definition, may have to explore an extremely large number of potential paths, most of which may never arrive at the confidential information of interest. A lot of processing time may therefore be wasted exploring large numbers of paths which turn out not to be of interest.

### BRIEF SUMMARY OF THE INVENTION

A goal of the present invention is to provide a quantitative estimate of the probability of a successful cyber-attack on an organisation's information system. Such attacks may include those of a multi-stage nature, where a first attack is made across a wide area network such as the Internet and then, when a breach is found, during further stages, local vulnerabilities are exploited in order to work towards taking control of, or otherwise gaining access to, a particular device, or node, in the organisation's system.

A system and a method are described to analyse the exposure of certain information assets within an information system to the risk of cyber-attack.

According to a first aspect, provision is made for an automated processor-implemented method for optimising a level of protection against exploitation, by a malicious party, of at least one information asset within an information system, the information system having a topology comprising a first node where the information asset is stored and one or more further nodes where further information assets are stored, the nodes being secured by corresponding connectors through which access is provided to actors who present a corresponding valid access credential, said security being circumventable by actors who employ a circumventing method having a pre-determined attack strength, the connectors each having a corresponding vulnerability index depending on the attack strength the malicious party would need to employ to circumvent said security;
the topology further including one or more theoretical attack paths comprising a chain of said connectors linked via their corresponding nodes, the theoretical attack paths each having a first end at the first node and a second end at an entry node, the entry node being a further node to which the malicious party has access, the theoretical attack paths each having at least one exploit probability rating which is a function of at least the vulnerability indices of the connectors in the chain; the method comprising:
   recursively exploring, using the processor, a plurality of the theoretical attack paths to find one or more potential attack paths, a potential attack path being a theoretical attack path whose exploit probability rating is higher than a pre-determined threshold;
wherein one or more of the connectors have one or more programmable parameters having values which are modifiable to alter the corresponding vulnerability index, the method further comprising:
   for at least one potential attack path, modifying, by the processor, at least one parameter of at least one of the connectors in the potential attack path; and
   re-calculating, by the processor, the exploit probability rating for the potential attack path.

According to another aspect, there is provided an optimisation module for optimising a level of exposure, to cyber-attacks, of an information asset in an information system, the information system having a topology comprising a first node where the information asset is stored and one or more further nodes where further information assets are stored, the nodes being secured by corresponding connectors through which access is provided to actors who present a corresponding valid access credential, said security being circumventable by actors who employ a circumventing method having a pre-determined attack strength, the connectors each having a corresponding vulnerability index depending on the attack strength the malicious party would need to employ to circumvent said security;
the topology further including one or more attack paths comprising a chain of said connectors linked via their corresponding nodes, the attack paths each having a first end at the first node and a second end at an entry node, the entry node being a further node to which the malicious party has access;
the optimisation module comprising:
an analysis module configured to recursively explore at least one of the attack paths by calculating at least one exploit probability rating for the attack path as a function of at least the vulnerability indices of the connectors in the chain;
a simulation module configured to modify at least one parameter associated with at least one of the connectors of at least one attack path and to re-calculate the exploit probability rating of the attack path; and
an output module configured to report the attack paths.

### BRIEF DESCRIPTION OF THE DRAWINGS

The inventive concepts described herein will be better understood thanks to the detailed description which follows and the accompanying drawings, which are given as nonlimiting examples of embodiments of the inventive concepts, namely:
figure 1, illustrating a system in which an embodiment of the present invention may be deployed;
figure 2, showing a potential attack path in a system according to an embodiment of the present invention; and
figure 3, showing a potential attack path having been rendered a theoretical attack path using a method according to an embodiment of the present invention.

### DETAILED DESCRIPTION

Business organisations rely on having access to information assets, which often include information which should be kept confidential. Loss, corruption, leakage or inaccessibility to such information assets may result in the business being subject to adverse financial, reputational or legal consequences, which may be extremely severe.

Information assets may be stored anywhere within the information system of the organisation. As well as electronically stored information, such information assets may include physical records stored as paper documents in a secure office somewhere on the organisation's premises, at one or more physical sites, or entrusted to a partner entity to be stored on their premises. Information assets may be stored on one or more computer systems, in the form of electronic documents, files, programmes, records and the like. Other information assets may be stored in an employee's own memory. Consequently, the information system in which the organisation's information assets may be stored may include one or more computer networks, one or more physical locations and employees. Malicious third parties may attempt to compromise the security of the organisation's information system. Methods used by malicious parties usually include the use of cyber-attack techniques.

According to embodiments described herein, information assets, or datasets, are attributed a certain impact value depending on the level of severity of the consequences resulting from an unwanted exploitation of the dataset by a malicious party. The impact value may be expressed in monetary terms, thus reflecting a possible financial consequence that such an attack might have on the organisation. In the present description this value is referred to as an impact value of an asset. A pre-determined impact value may be attributed to an asset depending on the level of severity of the consequences resulting from a successful attack on, and a subsequent unauthorised access to, the asset by a malicious party. According to different embodiments, asset impact values may be categorised. A dataset may have a plurality of impact values having different categories. For example, one dataset may be attributed an impact value in the case where the dataset is leaked or copied or otherwise accessed in a read mode by a malicious party. This would be a first category of impact value. The dataset may have an impact value in case of modification, where the malicious party alters the dataset. This would be a second category of impact value. Another category of impact value may be the impact value should the authorised user no longer have access to the dataset, which would be the case in a ransomware type of attack. Another category may be the impact value for reconstituting or reconstructing the dataset if it gets lost or damaged. The first category could be referred to as a confidentiality impact value, the second an integrity impact value and the last two may be accessibility impact values.

Embodiments described herein provide for the analysis and improvement of the security of an organisation's information system with respect to its vulnerability to cyber-attacks. A goal is to provide a measure of exposure to attack. The measure should be repeatable, providing preferably the same value for the same system conditions. Embodiments of the invention described herein therefore provide substantially the same results independently of which particular auditor uses the invention to perform the analysis and/or the improvement. According to an aspect, simulations may be performed using a model of the information system and taking account of the impact value of the information assets and the level of protection afforded by the elements which are meant to contribute to the security of the organisation. The levels of protection afforded by the security elements may be configurable or re-configurable, having parameters which are adjustable depending on the level of protection required. According to embodiments, the parameters may be automatically adjusted, preferably to render the system less vulnerable, and simulations may be recursively repeated until an acceptable level of risk is reached.

According to various embodiments, the security elements mentioned above are access control elements, which are also referred to below as connectors. A connector provides access control to a corresponding node. Different nodes may be linked, via their corresponding connectors, to form chains of connectors making up access paths. The connectors provide access to their corresponding nodes to actors who are able to provide valid access credentials. An access path may therefore be described as a chain of connectors linked by their respective nodes, having a first end at an information asset and a second end at an authorised user. A dataset would be accessible to an actor who is able to provide valid access credentials for all of the connectors in the access path leading to the node where the dataset is stored.

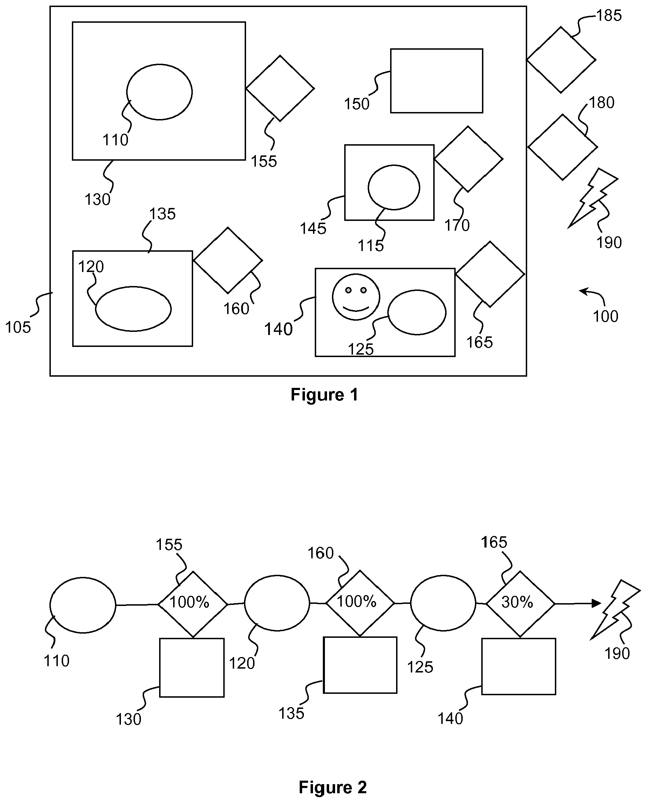

Figure 1 illustrates a part of an information system **100** in which an embodiment of the present invention may be deployed. Figure 1 shows a local area network (LAN) **105** within the premises of an organisation. An authorised party, for example an employee of the organisation, having the necessary access credentials, may connect to the LAN **105** from outside of the organisation's premises using a virtual private network connection (VPN) **180**. Otherwise, the employee may have a key giving him or her physical access to the premises to make a local, possibly physical, connection to the LAN **105**. In the premises there may be one or more computers **135** connected to the LAN, which employees on the premises may use to connect to the network **105**. Such a connection is generally made using a protocol which requires the employee to identify himself or herself while providing the necessary access credentials, for example using a local session (LS) **160**. The organisation may also use a data storage server, such as a Network-Attached Storage Device (NAS) **130**, accessible via a file sharing protocol, such as a Server Message Block Protocol (SMB) **155**, which also requires valid credentials. According to embodiments of the invention, access control elements such as the VPN, the LS or the SMB are connectors which provide access to their corresponding nodes, the LAN, the portable computer and the NAS, respectively. A first information asset of interest, dataset **110**, may be stored on the NAS.

The information system described above can be said to have a topology, or an architecture, which includes a number of nodes having corresponding access control elements, or connectors, which provide access to their corresponding nodes to users who have the correct access credentials. A node can be any device or resource upon which an information asset may be accessed. A node may therefore be a disk drive on which the information asset is stored, such as the NAS **130** in figure 1 or a hard drive of a workstation or PC **135**, **145**, for example. A node may also be the LAN **105** itself because the LAN allows access to where information assets **110**, **115** are stored. The information asset may be the dataset **110**, **115** having a certain asset value, as described above, or it may be access credentials **120**, **125** such as a password needed to log in to a workstation or PC **135**, **145** or to access the NAS **130**. According to the invention, an employee **140** may also be regarded as a node because the employee usually has knowledge of information assets **125** such as login passwords or access credentials for an encrypted disk drive for example. Access credentials for a VPN may be a user-name and a password, etc. Access credentials for an encrypted disc may be a decryption key. The topology includes one or more legitimate access paths which would allow an authorised user, an employee for example, to access the information assets. For example, in figure 1, the employee **140** may have an account on the workstation **135** for which he or she knows the login name and the corresponding password in order to perform a login using the local session (LS). Using these LS credentials, the user can access a set of SMB **155** credentials **120** which will allow him or her to further access the NAS **130** where the dataset **110** is stored. In this case the access path can be said to start from the dataset **110**, through the SMB **155** to the workstation **135**, through the LS **160** to the employee **140**. The legitimate access path therefore starts at the dataset and comprises nodes linked together via connectors and ends at an authorised party. Connectors provide conditional access to nodes. For a party to take control of a node, or otherwise gain access to the node, the party must either provide the access credentials for the connector corresponding to the node or circumvent the protection provided by the connector, for example by exploiting a security weakness in the connector or by using a brute-force attack. Providing the correct access credentials is usually easy for an authorised party but difficult for a malicious party. Instead of attempting to circumvent the protection provided by the connector, the malicious party may choose to search for the access credentials by further exploring the information system in case the access credentials or information leading to the access credentials might be stored on another node. A recursive search may be carried out in an effort to find such access credentials. A party who takes control of a node has access to any information available from that node. In the present description it is said that a connector is traversed if either the access credentials for the connector can be provided by a malicious party or the protection conferred by the connector can be circumvented by the malicious party.

Figure 1 also illustrates an example of a nested node configuration, wherein a node is contained within another node. This is the case with the LAN because the LAN **105**, which is itself a node, contains nodes **130**, **135**, **140**, **145** and **150**. The latter nodes **130**, **135**, **140**, **145** and **150** may therefore be called nested nodes. Thus, a nested node, contained in a first node, will be available to a party who gains access to the first node, on condition that the party can provide access conditions required to access the nested node, or if the party can otherwise circumvent the security of the nested node. A direct consequence of having a nested node configuration is that the number of connectors to deal with increases in correlation with the number of nested nodes which are present within a node, thereby increasing the number of access paths.

Figure 1 shows an information system comprising a LAN. Other embodiments may include a plurality of LANs, one or more WANs and/or one or more PANs or other such networks. Components of the system may communicate over a combination of wired and/or wireless paths. As mentioned above, a node may be the LAN itself or a computer or a storage medium such as a hard disk or a USB drive, for example. A node may be a piece of paper because the paper can store information assets or access credentials for accessing another node. A node may even be a human because a human can store the information assets or access credentials in his or her mind or memory, in which case communications over the system may be made non-electronically, by means of the human.

Just as the asset impact values of the datasets may be categorised, it follows that it is also possible to categorise the paths into different types depending on whether the path would provide the malicious party with read access, write access or a particular access which would prevent a legitimate or authorised party from having access to the dataset. Consequently, it can be said that the exploit probability rating of an access path may be of a certain category. An access path may therefore have a plurality of exploit probability ratings each being of different categories.

Depending on the amount of effort required to circumvent the protection conferred by a connector, the connector may be attributed a particular vulnerability index. For example, there may exist a given circumvention method which may be described as being a weak method in that the effort which the circumvention method is able to furnish for circumventing the security provided by a connector is a weak or low effort. If the use of such a circumventing method nonetheless allows for the security provided by the connector to be bypassed, then that connector may be deemed to have a relatively high vulnerability index. On the other hand, if the connector can only be bypassed by a strong circumventing method, then the connector may be attributed a much lower vulnerability index. In other words, connectors whose security may be bypassed, or circumvented, using circumventing methods having lower attack strengths will have higher vulnerability indices, while connectors whose security may be only circumvented through the use of circumventing methods having higher attack strengths will have lower vulnerability indices.

As well as the legitimate access paths described above, the topology may further include one or more theoretical attack paths that a malicious party **190** may use to access the dataset **110**. A theoretical attack path starts at the node where the dataset resides and continues via the node's connector to a further node if the connector can be traversed. The path may continue to a still further node if the further node's connector can also be traversed, and so on until a node over which the malicious party has control, or access, is reached. The theoretical attack path therefore can be said to be similar to a legitimate access path in that it has a first end at the information asset, but its second end is at a node which is accessible by a malicious party. In order for an access path to be able to continue from a first node to a further node, the first node need only be accessible, via the further node's connector, from the further node. In a networked environment, such connectivity or linkability is readily provided via hardwired busses and interconnect or wireless connections. According to embodiments, nodes may be linkable by other means. For example, a NAS may be accessible using a password and the password may be written on a piece of paper and stored in an office to which an employee has access. A malicious party may find a means of contacting the employee, arranging a meeting in the office where the paper is held, for example, and copying the paper while the employee is distracted. Other such scenarios are possible for providing non-electronic links between nodes according to embodiments of the present invention. A paper may be described as being a non-electronic storage medium.

Figure 2 shows an example of a potential attack path in the system shown in figure 1. The attack path allows the malicious party **190** to reach the employee **140**, for example by using a phishing attack. A phishing attack generally passes via an email message for example, so the connector to the employee in this case is the email address **165**. The phishing attack may allow the malicious party to learn the LS credentials **125**, which were known to the employee, thus allowing the malicious party to access the workstation **135** via the LS **160**. Access to the workstation allows the malicious party to access the SMB credentials **120**, which in turn allows the malicious party to access the NAS **130** via the SMB **155** and thus to reach the information asset **110**.

Other examples of connectors include encryption algorithms, an SMB, a VPN, an LS, a physical access to a location, or an email account. The corresponding access credentials in the above examples may be a decryption key for the encryption algorithm, a username and password for the VPN, SMB or LS, a physical key or an electronic key for a particular location or site or facility or an email address to access a person via email. It is worth noting that a physical key, being a form of access credential may be considered to be a dataset which requires to be secured. In this case a physical object, such as the key, may be considered to be a non-digital dataset. Likewise, a physical location where a dataset, key or paper, for example, may be stored, can be considered to be a node.

Starting from the dataset of interest, a number of different theoretical attack paths for getting the dataset out to the malicious party may be derived or otherwise extracted. For each theoretical attack path, an exploit probability rating is calculated, the exploit probability rating reflecting the probability of the malicious party being able to gain access to the dataset. The exploit probability rating starts at 100% at the dataset and then is recursively updated depending on the elements found along the theoretical attack path extending from the dataset to the entry node. For example, if the connector corresponding to the node is easy to circumvent, meaning it has a high vulnerability index, then perhaps the exploit probability rating remains at a value near 100%. If the next node provides the access credentials for the preceding connector, then the exploit probability rating may again remain near 100%. If the next connector on the path has a medium vulnerability index, then perhaps the exploit probability rating may descend to somewhere around 30%, and so on. If one or more of the connectors in the theoretical attack path could be re-configured or have one or more of its parameters adjusted in such a way that it brings its vulnerability index down, then it may be possible to lower the exploit probability rating of the theoretical attack path to a value which is substantially lower than 30%, which would be an improvement..

According to an embodiment, the exploit probability rating may further take account of the asset value of the dataset. An exploit probability rating threshold may be chosen depending on how much risk the organisation is prepared to accept. If the exploit probability rating of the path reaches or falls below the pre-determined exploit probability rating threshold, then the theoretical attack path may be considered not to be a threat or otherwise to present a tolerable risk. However, if the exploit probability rating of the theoretical attack path remains above the exploit probability rating threshold after all of the recursive adjustments of the rating from the first end all the way to the second end, then this becomes a potential attack path and is to be treated as a threat in that the path presents an unacceptable risk of exploitation by a malicious party. According to certain embodiments, the threat, or risk, may simply be reported. There are many ways of reporting threats, including outputting a risk chart for example.

According to an embodiment, rather than taking account of the exploit probability rating with respect to a pre-determined exploit probability threshold, the risk level is considered with respect to a pre-determined risk level threshold. Thus, the value of the information asset is taken into consideration as well as the exploit probability rating. For example, if the dataset **110** in figure 2 were to have an impact value of $600,000, then the risk level for the path between the dataset and the malicious party would be a function of the impact value and the probability rating. For a simple function such as a multiplication, for example, the risk level would be $180,000. Functions other than this simple multiplication are also possible. If the risk threshold were $100,000, then the path would be signalled as presenting too high a risk. According to embodiments, a solution may be proposed for reducing the risk. According to other embodiments, the processor will implement a solution which would have the effect of reducing the vulnerability index of one or more connectors in the path.

The vulnerability index of a connector may depend on several factors. For example, for a connector in the form of a gateway device, a known security vulnerability may exist in the gateway's operating system, for which a patch is available, but the patch has not yet been installed. The level of protection provided by the gateway device may be improved by installing the patch. By way of a further example, a workstation may require password entry, but the password may currently be set to a 4-character value which would be easy to circumvent by brute force. The vulnerability index of this connector may be improved by using a password of 20 characters in length for example. By way of yet another example, a firewall may have a number of different configuration settings which are re-configurable. The firewall may be misconfigured, leaving it vulnerable to cyber-attack. Other configurations of the parameter settings may render the firewall more or less secure. It follows that depending on the way the parameters are set the firewall may present more or less of a security risk to the information system. Parameters of connectors may therefore be modified in order to modify their vulnerability index, or vulnerability indices. According to embodiments, such modification may be done manually. According to other embodiments, such modification may be performed automatically under control of a suitable processor.

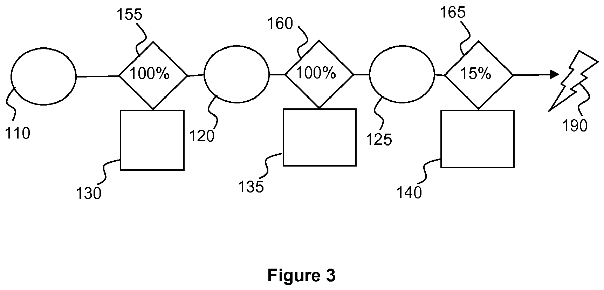

Figure 3 shows an example of the exploit probability rating of the potential attack path shown in figure 2 having been modified using a method according to an embodiment of the present invention, which results in transforming the potential attack path into a theoretical attack path presenting a tolerable risk of attack. In this example, the vulnerability index of the connector **165** providing access to the node represented by the employee **140** has been reduced, in this case from 30% to 15%, to reflect the fact that the employee has followed specific training to render the employee aware of the dangers of phishing. The resulting reduction of the vulnerability index of the connector **165** has allowed for the calculated exploit probability rating of the path to be reduced below the pre-determined threshold. As can be seen in this example, the vulnerability index of a connector may be modified in some cases by acting on the corresponding node rather than on the connector. It can be said that an action performed on a node may result in the vulnerability index of its corresponding connector to become altered. In this case, taking the action of providing training to the employee **140** allows for the vulnerability index of the connector **165** to decrease. In other cases, action is made directly on the connector to reduce its vulnerability index.

Again, considering a risk threshold rather than an exploit probability threshold, in the example of figure 3, if the impact value of the dataset **110** were set at $600,000, then, using the simple example function of impact value and exploit probability rating described above, the risk of the dataset being exploited would be reduced to $90,000, which would be an improvement over the risk illustrated in figure 2. If the risk threshold were set at $100,000, then the action of training the employee would resulting in an improvement to the vulnerability index of the connector **165**, the attack path now presenting an acceptable risk. Depending on the type of connector whose vulnerability index is to be improved, one or more parameters related to the connector may be automatically modified by the processor to reduce the vulnerability index.

According to an embodiment of the invention, a processor is used to explore a number of access paths, starting from a dataset of interest, which would allow a malicious third party to have access to the node where the dataset is stored. There may be a very large number of access paths. In order to provide efficient processing, according to embodiments, only potential attack paths are explored all the way up to the second end of the path. Potential attack paths are access paths which are deemed to be theoretical attack paths and whose exploit probability rating remains above a pre-determined threshold all the way up to a node over which the malicious party has control or to which the malicious party has access. By excluding from further consideration any paths whose exploit probability rating falls below the pre-determined threshold before the second end of the path is reached, the efficiency of the exploration method can be increased.

By exploring a path, it is meant aggregating a number of attributes of elements found in the path to provide either an exploit probability rating or a risk level for the path, such as by aggregating vulnerability indices of connectors found in the path or by aggregating vulnerability indices and the impact level of the information asset at the end of the path.

The approach of exploring paths beginning at the dataset of interest and working outwards ensures that priority may be given to paths which lead to the datasets having the highest impact values. For example, given a first dataset and a second dataset, where the first dataset is substantially more sensitive than the second dataset, it is best to spend more time and/or effort in exploring potential attack paths from the first dataset than from the second dataset. The methods according to the present invention are particularly efficient given that the aggregated value diminishes as the path progresses and the exploration of a path can end as soon as the aggregated value falls below the pre-determined threshold. This approach naturally provides for paths which are not of interest to be excluded from the exploration since only paths which would actually lead to the dataset are considered. In methods which explore paths starting from the outside and working towards the dataset, it is necessary to explore many paths which would never lead to the dataset.

According to an embodiment of the invention, the processor is configured to report on the level of protection provided by the information system against exploitation of information assets by a malicious party. The processor may therefore be configured to calculate risk levels for the potential attack paths and to present the report in the form of a risk analysis chart. According to one embodiment the risk is based on the exploit probability rating. According to another embodiment, the risk is based on both the exploit probability rating and the impact value of the dataset or information asset. Since the impact value may be expressed in terms of monetary value, the risk may also be expressed in terms of monetary value. Furthermore, since the impact value may belong to one of a plurality of different categories, there may also be a plurality of different categories of risk. A single potential attack path may therefore have a plurality of risks each pertaining to different categories. Likewise, different potential attack paths may present risks in different categories. For example, a potential attack path may present a confidentiality risk and/or an integrity risk and/or an access risk. One path may present a confidentiality risk and an integrity risk, while another path may present a confidentiality risk and an access risk. A path presenting a high confidentiality risk may present a low access risk for example, or vice versa. Similarly, a path presenting a high integrity risk may present a correspondingly low access risk, or vice versa.

As disclosed above, the processor may be configured to present risks in a classified or otherwise prioritised format, such that paths having the exploit probability ratings and/or whose information assets have the highest impact value are brought to the attention of the system administrator as having the highest priority. According to one embodiment, the processor is configured to prioritise the corrective measures depending on the reduction in exploit probability rating such a measure will provide to one or more paths. According to another embodiment, the processor is configured to take account of the cost of implementing a modification to the parameter affecting the vulnerability index of the connector when reporting or otherwise prioritising the risks, or exploit probability ratings, of the respective access paths. For example, a simple re-configuration of a gateway device by modifying one or more of its parameter settings may be both easy to implement and unlikely to cause untoward malfunctioning of the gateway device. A solution provided by the processor, which involves such a simple re-configuration would therefore be deemed to have a relatively small cost. On the other hand, if an operating system update is the recommended solution for improving the vulnerability index of a VPN for example, and such an update is considered to present a high chance of malfunctioning somewhere in the system, then the cost of implementing such a modification would be deemed to be relatively high. The cost of the modifications would then be factored into the risk calculations, which could result for example in a path having a high risk value but also a relatively high cost for implementing an improvement appearing in the report with a lower priority than a path having a lower risk but a lower cost for implementing a modification.

In figures 2 and 3 it is considered that the malicious party **190** gained control over the employee **140**. A more complete illustration of the attack path used may include a router **180**, which may be the connector for the LAN **105**. The malicious third party **190** may physically locate itself close enough to the organisation's premises to be able to receive a Wi-Fi signal from the router **180**. The router may have a known security problem, which a software update would have resolved, but due to a lapse in security at the organisation, the router did not receive the software update. Should the malicious third party detect this, it would then be able to exploit the security problem and gain control of at least a part of the LAN, thus potentially gaining access to one or more nodes within the LAN.

The method of the invention may be performed by a processor, which may be an optimisation module configured to explore a plurality of access paths within an information system which would allow a malicious party to exploit an information asset within the information system. The information system may have a topology including a number of nodes having corresponding connectors providing access, to users who have the correct access credentials, to their respective nodes, one or more legitimate access paths which would allow an authorised user to access the information assets and one or more theoretical attack paths that a malicious party **190** may use to access the dataset **110**.

According to an embodiment, the optimisation module may include a topology extraction module to extract the access paths from the topology. The optimisation module may further include an analysis module to recursively explore the paths and to calculate the exploit probability ratings of the extracted paths based at least on the vulnerability indices of the connectors on the path. According to an embodiment, the analysis module may further take account of a risk level of the path by considering at least the impact value of the information asset. The optimisation module may further be configured to modify one or more parameters of one or more of the connectors and to cause the analysis module to redo the analysis using the modified parameters. Redoing the analysis may include redoing the recursive exploration of the extracted access paths and recalculating the exploit probability ratings of the extracted paths using the modified parameters of the connectors on the path. According to an embodiment, redoing the analysis may further include taking into consideration the impact value of the information asset. The optimisation module may further comprise an output module to present the analysis results and optimisation recommendations. According to an embodiment, optimisations recommendations are automatically put into practice by automatically modifying one or more parameters of one or more connectors under control of a suitably configured automated processor.

## Claims

1. An automated processor-implemented method for optimising a level of protection against exploitation, by a malicious party (190), of at least one asset (110) within an information system (100), the information system having a topology comprising a first node (130) where the asset is stored and one or more further nodes (105, 135, 140, 150) where further assets are stored (120, 115, 125), the nodes being secured by corresponding connectors (155, 160, 165, 170, 180, 185) through which access is provided to parties who present a corresponding valid access credential, said security being circumventable by the malicious party employing a circumventing method having a pre-determined attack strength, the connectors each having a corresponding vulnerability index depending on the attack strength the malicious party would need to employ to circumvent said security;
the topology further including one or more theoretical attack paths comprising a chain of said connectors linked via their corresponding nodes, the theoretical attack paths each having a first end at the first node and a second end at an entry node, the entry node being a further node to which the malicious party has access, the theoretical attack paths each having at least one exploit probability rating which is a function of at least the vulnerability indices of the connectors in the chain; the method comprising:
recursively exploring, using the processor, a plurality of the theoretical attack paths to find one or more potential attack paths, a potential attack path being a theoretical attack path whose exploit probability rating is higher than a pre-determined threshold;
wherein one or more of the connectors have one or more programmable parameters having values which are modifiable to alter the corresponding vulnerability index, the method further comprising:
for at least one potential attack path, modifying, by the processor, at least one parameter of at least one of the connectors in the potential attack path until the exploit probability rating falls below the pre-determined threshold.

2. The method according to claim 1, wherein the exploit probability rating function further depends on whether at least one of the further assets is an access credential corresponding to one or more of the connectors in the theoretical or potential attack path.

3. The method according to either of the preceding claims, wherein the asset has at least one pre-determined impact value, the method further comprising calculating, by the processor, a risk level, the risk level being a function of at least the impact value of the asset and the exploit probability rating of the potential attack path, said reporting including an indication of the risk level.

4. The method according to any of the preceding claims, further comprising:
reporting one or more of the thus found potential attack paths.

5. The method according to any of the preceding claims, wherein for at least one of the nodes an action taken on the node causes the vulnerability index of the corresponding connector to be altered, the method further comprising taking said action on said node.

6. The method according to any of the preceding claims, wherein the impact level of the asset depends on an estimated loss should the asset be exploited by the malicious party.

7. The method according to any of the preceding claims, wherein the node is one from: an electronic storage medium; a physical non-electronic storage medium; a person; an electronic communications network; a computing device; or a plurality of interconnected electronic communications networks.

8. The method according to any of the preceding claims, wherein the connector is a conditional access element having corresponding access credentials, the connector being configured to provide access to its corresponding node to an actor who provides the corresponding access credentials.

9. The method according to any of the preceding claims, wherein the connectors are linked by wired or wireless electronic connections in a network, or by the possibility of a person moving from one location to another between the connectors.

10. The method according to any of the preceding claims, wherein said exploitation is made by the malicious party having a particular type of access to the asset, the vulnerability index or the exploit probability rating or the risk level consequently belonging to a category which depends on said type of access.

11. The method according to any of the claims 4 to 10, wherein said modification has a corresponding cost, said report taking account of the cost of the modification.

12. The method according to any of the preceding claims, wherein said recursive exploring starts at the first node and works its way out towards the entry node until either the exploit probability threshold is reached or until the entry node is reached.

13. The method according to any of claims 3 to 12, wherein said recursive exploring starts at the first node and works its way out towards the entry node until either the risk threshold is reached or until the entry node is reached.

14. An optimisation module for optimising a level of exposure, to cyber-attacks, of an asset (110) in an information system (100), the information system having a topology comprising a first node (130) where the asset is stored and one or more further nodes (105, 135, 140, 150) where further assets are stored (120, 115, 125), the nodes being secured by corresponding connectors (155, 160, 165, 170, 180, 185) through which access is provided to actors who present a corresponding valid access credential, said security being circumventable by actors who employ a circumventing method having a pre-determined attack strength, the connectors each having a corresponding vulnerability index depending on the attack strength the malicious party would need to employ to circumvent said security;
the topology further including one or more attack paths comprising a chain of said connectors linked via their corresponding nodes, the attack paths each having a first end at the first node and a second end at an entry node, the entry node being a further node to which the malicious party has access;
the optimisation module comprising:
an analysis module configured to recursively explore at least one of the attack paths by calculating at least one exploit probability rating for the attack path as a function of at least the vulnerability indices of the connectors in the chain;
a simulation module configured to modify at least one parameter associated with at least one of the connectors of at least one attack path and to re-calculate the exploit probability rating of the attack path; and
an output module configured to report the attack paths.

15. The optimisation module according to claim 14, wherein at least one of the nodes is a human.
